# EUROPÄISCHE PATENTSCHRIFT

(11) **EP 3 630 368 B1**
(45) Veröffentlichungstag und Bekanntmachung des Hinweises auf die Patenterteilung: **06.09.2023**
(21) Anmeldenummer: 18726134.2
(22) Anmeldetag: 18.05.2018
(51) Int. Cl.: B05B 7/00, B05B 14/00, B23Q 11/10

(54) **AEROSOLVORRICHTUNG UND VERFAHREN ZUM BEREITSTELLEN EINES AEROSOLS**
AEROSOL DEVICE AND METHOD FOR PROVIDING AN AEROSOL
DISPOSITIF AÉROSOL ET PROCÉDÉ DE PRODUCTION D'UN AÉROSOL

(30) Priorität: 30.05.2017 DE 102017209068
(43) Veröffentlichungstag der Anmeldung: 08.04.2020
(73) Patentinhaber: Dropsa BM Germany GmbH, 72636 Frickenhausen (DE)
(72) Erfinder: HAAS, Reiner, 72555 Metzingen (DE)
(74) Vertreter: DTS Patent- und Rechtsanwälte Schnekenbühl und Partner mbB
(86) Internationale Anmeldenummer: PCT/EP2018/063106
(87) Internationale Veröffentlichungsnummer: WO 2018/219693

(56) Entgegenhaltungen:
- EP-A1- 0 608 176
- EP-A1- 0 941 769
- WO-A1-03/002263
- DE-A1- 2 755 060
- US-A- 3 515 676
- US-A- 5 800 598
- US-A1- 2005 017 092
- US-A1- 2009 230 215
- US-B1- 6 290 024

## Beschreibung

Die vorliegende Erfindung betrifft eine Aerosolvorrichtung und ein Verfahren zum Bereitstellen eines Aerosols. Aerosolvorrichtungen und Verfahren zum Bereitstellen von Aerosolen kommen beispielsweise auf dem Gebiet der Werkzeugschmierung zum Einsatz. Insbesondere kann eine Verwendung in Schmiersystemen, beispielsweise sogenannten Minimalmengenschmiersystemen, vorgesehen sein.

Aerosolvorrichtungen und Verfahren zum Bereitstellen von Aerosolen sind beispielsweise aus folgenden Druckschriften bekannt:
DE 103 49 642 A1, DE 101 04 012 C2, DE 101 01 889 A1, DE 102 17 927 B4,
DE 20 2015 102 484 U1, DE 20 2009 017 542 U1, DE 10 2009 060 454 A1, EP 2 839 882 A1, EP 2 574 424 B1, EP 2 574 423 A1, DE 20 2013 103 529 U1, EP 2 338 587 A1,
WO 03/002263 A1, US 5,800,598 A, EP 0 608 176 A1, US 2005/017092 A1,
US 2009/230215 A1, US 6,290,024 B1, DE 27 55 060 A1, US 3,515,676 A,
EP 0 941 769 A1.

Der vorliegenden Erfindung liegt die Aufgabe zugrunde, eine Aerosolvorrichtung bereitzustellen, welche die Bereitstellung eines Aerosols mit optimierter Zusammensetzung, insbesondere optimierter Tröpfchengrößenverteilung (Liquidtröpfchengrößenverteilung, Teilchengrößenverteilung), ermöglicht.

Diese Aufgabe wird erfindungsgemäß durch eine Aerosolvorrichtung gemäß dem unabhängigen Vorrichtungsanspruch gelöst.

Die Aerosolvorrichtung umfasst ein Aerosolgehäuse.

Ferner umfasst die Aerosolvorrichtung eine oder mehrere Aerosoldüsen zur Erzeugung eines Aerosolstroms aus einem Transportgas und einem Liquid, wobei die eine oder die mehreren Aerosoldüsen in einen Innenraum des Aerosolgehäuses hineingerichtet und/oder in dem Aerosolgehäuse angeordnet sind.

Die Aerosolvorrichtung umfasst einen oder mehrere Transportkanalanschlüsse zum Anschließen eines oder mehrerer Transportkanäle, mittels welcher das Aerosol aus dem Innenraum des Aerosolgehäuses abführbar ist.

Erfindungsgemäß ist vorgesehen, dass die Aerosolvorrichtung eine Abscheidevorrichtung zum Abscheiden von Liquidtröpfchen aus dem Aerosol umfasst, wobei die Abscheidevorrichtung bezüglich einer Strömungsrichtung des Aerosols zwischen der einen oder den mehreren Aerosoldüsen einerseits und dem einen oder den mehreren Transportkanälen andererseits angeordnet ist.

Ein Transportkanal ist insbesondere eine Leitung. Beispielsweise ist ein Transportkanal ein flexibler Schlauch.

Mittels des Transportkanals ist das Aerosol insbesondere zu einem Bereitstellungsort transportierbar.

Günstig kann es sein, wenn mehrere Transportkanäle vorgesehen sind, welche einerseits an dem Aerosolgehäuse festgelegt sind und andererseits an einem gemeinsamen Bereitstellungsort enden.

Die Transportkanäle können dabei identisch dimensioniert sein.

Vorzugsweise sind jedoch mehrere Transportkanäle mit unterschiedlichen Dimensionen vorgesehen. Hierdurch kann insbesondere eine optimierte Förderung des Aerosols bei unterschiedlichen Tröpfchengrößenverteilungen, Volumenströmen und/oder Massenströmen realisiert werden.

Die Abscheidevorrichtung umfasst vorzugsweise einen Zentrifugenabscheider und/oder einen Umlenkabscheider.

Die Abscheidevorrichtung ist insbesondere größenselektiv, beispielsweise derart, dass bezogen auf eine Tröpfchengrößenverteilung des Liquids im Aerosol größere Liquidtröpfchen abgeschieden werden und vergleichsweise kleinere Liquidtröpfchen im Transportgas weitertransportiert werden.

Die Abscheidung von Liquidtröpfchen erfolgt vorzugsweise an einer Außenwandung des Aerosolgehäuses.

Günstig kann es sein, wenn der Innenraum des Aerosolgehäuses zumindest näherungsweise rotationssymmetrisch ausgebildet ist.

Alternativ oder ergänzend hierzu kann vorgesehen sein, dass eine oder mehrere Aerosoldüsen zumindest näherungsweise tangential in den Innenraum hineingerichtet sind, so dass insbesondere ein ringförmig oder spiralförmig oder helikal rotierender Aerosolgasstrom im Innenraum des Aerosolgehäuses erzeugbar ist.

Eine Abscheidung an der Außenwandung des Aerosolgehäuses ergibt sich vorzugsweise dadurch, dass aufgrund der auftretenden Zentrifugalkraft schwerere Liquidtröpfchen radial nach außen befördert werden und schließlich an der Außenwandung anhaften.

Der Innenraum des Aerosolgehäuses umfasst einen Ringstrombereich und einen Zentralbereich.

Der Ringstrombereich ist insbesondere derjenige Bereich, in welchem sich der ringförmig oder spiralförmig oder helikal rotierende Aerosolgasstrom ausbildet.

Der Ringstrombereich umgibt den Zentralbereich im Wesentlichen ringförmig.

Die eine oder die mehreren Aerosoldüsen sind in den Ringstrombereich hineingerichtet. Der eine oder die mehreren Transportkanalanschlüsse grenzen unmittelbar an den Zentralbereich an.

Somit ist direkt aus dem Zentralbereich Aerosol aus dem Innenraum des Aerosolgehäuses entnehmbar.

Der Ringstrombereich und der Zentralbereich sind mittels einer Trennwandung räumlich voneinander getrennt.

Insbesondere ist die Trennwandung im Wesentlichen hohlzylinderförmig, beispielsweise hohlkreiszylinderförmig, ausgebildet.

Die Trennwandung ist vorzugsweise an dem Aerosolgehäuse festgelegt.

Insbesondere ist die Trennwandung an einer Deckenwandung des Aerosolgehäuses festgelegt und erstreckt sich ausgehend von der Deckenwandung in der Schwerkraftrichtung nach unten.

Eine Verbindung zwischen der Deckenwandung und der Trennwandung im Bereich der Deckenwandung ist vorzugsweise fluidundurchlässig.

Vorzugsweise ragt die Trennwandung frei in den Innenraum des Aerosolgehäuses hinein, so dass die Trennwandung insbesondere an einem bezüglich der Schwerkraftrichtung unteren Ende der Trennwandung umströmbar ist.

Die Trennwandung umgibt vorzugsweise den Zentralbereich und ist von dem Ringstrombereich umgeben.

Günstig kann es sein, wenn die Trennwandung, eine Außenwandung des Aerosolgehäuses, eine noch zu beschreibende Zuführvorrichtung und/oder ein noch zu beschreibender Aerosolraumboden konzentrisch und/oder koaxial bezüglich einer Gehäuselängsmittelebene angeordnet und/oder ausgebildet sind.

Ein oder mehrere Transportkanalanschlüsse sind vorzugsweise in der Deckenwandung des Aerosolgehäuses angeordnet und/oder ausgebildet.

Ein oder mehrere Transportkanalanschlüsse sind insbesondere an einem oberen Endabschnitt des Zentralbereichs angeordnet und/oder ausgebildet.

Es kann vorgesehen sein, dass ein oder mehrere Auslassstutzen, welche insbesondere Bestandteil des einen oder der mehreren Transportkanalanschlüsse sind, in den Innenraum hineinragen, vorzugsweise in den Zentralbereich des Innenraums hineinragen.

Ein oder mehrere Auslassöffnungen sind vorzugsweise in der Deckenwandung des Aerosolgehäuses angeordnet und/oder ausgebildet.

Ein oder mehrere Auslassöffnungen sind insbesondere an einem oberen Endabschnitt des Zentralbereichs angeordnet und/oder ausgebildet.

Es kann vorgesehen sein, dass ein oder mehrere Auslassöffnungen, an welche sich insbesondere ein oder mehrere Transportkanalanschlüsse und/oder ein oder mehrere Transportkanäle anschließen, bündig und/oder kantenfrei und/oder mit einem fließenden Übergang an eine Deckenwandung des Aerosolgehäuses angrenzen und/oder in die Deckenwandung des Aerosolgehäuses integriert sind und/oder an die Trennwandung des Aerosolgehäuses angrenzen und/oder in die Trennwandung des Aerosolgehäuses integriert sind.

Die Auslassöffnungen umfassen vorzugsweise jeweils einen trichterförmigen Einströmbereich oder sind jeweils zumindest abschnittsweise als ein trichterförmiger Einströmbereich ausgebildet.

Insbesondere sind die Auslassöffnungen durch ein separates Bauteil gebildet, welches beispielsweise mit dem Aerosolgehäuse, insbesondere der Deckenwandung, verbunden und/oder an dem Aerosolgehäuse, insbesondere der Deckenwandung, festgelegt ist.

Das separate Bauteil ist insbesondere einstückig ausgebildet.

Das separate Bauteil ist insbesondere ein Entnahmeelement.

Günstig kann es sein, wenn das Entnahmeelement ein im Wesentlichen zylindrisches Element ist, welches insbesondere eine, zwei, drei, vier oder mehr als vier Auslassöffnungen aufweist.

Das Entnahmeelement weist vorzugsweise eine im montierten Zustand des Entnahmeelements dem Innenraum des Aerosolgehäuses zugewandte Einströmseite auf.

Die Einströmseite kann beispielsweise mit einer Einbuchtung, insbesondere einer kugelsegment- oder kugelabschnittsförmigen Einbuchtung, versehen sein.

In dieser Einbuchtung sind vorzugsweise ein oder mehrere Entnahmebereiche, insbesondere trichterförmige Entnahmebereiche, der Auslassöffnungen angeordnet.

An einer der Einbuchtung gegenüberliegenden Seite und/oder an einer dem Innenraum abgewandten Seite und/oder der Deckenwandung zugewandten Seite des Entnahmeelements sind vorzugsweise ein oder mehrere Transportkanalanschlüsse und/oder Befestigungsstellen zur Befestigung des Entnahmeelements angeordnet und/oder ausgebildet.

Das Entnahmeelement kann insbesondere mittels einer Schraubverbindung an der Deckenwandung festgelegt werden.

Vorzugsweise umfasst das Entnahmeelement einen Aufnahmebereich zur Aufnahme und/oder Festlegung und/oder Anordnung der Trennwandung.

Die Aerosolvorrichtung umfasst eine Zuführvorrichtung zum Zuführen eines Zusatzstoffs, insbesondere eines Liquids, zu dem Innenraum des Aerosolgehäuses.

Die Zuführvorrichtung ist insbesondere eine von der einen oder den mehreren Aerosoldüsen verschiedene Vorrichtung.

Beispielsweise kann vorgesehen sein, dass die Zuführvorrichtung eine zusätzliche Aerosoldüse und/oder eine Sprühdüse zum Einsprühen eines Liquids und/oder einen Tropfenerzeuger zum Einleiten von Liquidtropfen umfasst oder hieraus gebildet ist.

Mittels der Zuführvorrichtung ist ein Zusatzstoff, insbesondere ein Liquid außerhalb des Ringstrombereichs und/oder bezüglich einer Strömungsrichtung des Aerosols stromabwärts der Abscheidevorrichtung zu dem Aerosol zuführbar.

Die Zuführvorrichtung ist in Schwerkraftrichtung direkt unter dem Zentralbereich des Innenraums des Aerosolgehäuses angeordnet und/oder in den Zentralbereich hineingerichtet.

Mittels der Zuführvorrichtung sind insbesondere Liquidtropfen zu dem Aerosol zuführbar, wobei die Liquidtropfen im Vergleich zu den stromabwärts der Abscheidevorrichtung noch im Aerosol verbliebenen Liquidtröpfchen größer dimensioniert sind, beispielsweise um einen Faktor von mindestens ungefähr 5, insbesondere mindestens ungefähr 10, beispielsweise mindestens ungefähr 50.

Das Aerosolgehäuse umfasst vorzugsweise einen Aerosolbereich, in welchem das Aerosol geführt wird, und einen Sammelbereich, in welchem aus dem Aerosol abgeschiedenes Liquid gesammelt wird. Insbesondere ist der Sammelbereich direkt unter dem Aerosolbereich angeordnet.

Ein Aerosolraumboden trennt vorzugsweise den Aerosolbereich von dem Sammelbereich.

In einem an die Außenwandung angrenzenden Randbereich des Aerosolbodens ist vorzugsweise eine Öffnung, insbesondere eine ringförmige Öffnung, vorgesehen, so dass im Aerosolbereich abgeschiedenes Liquid in den Sammelbereich abfließen kann.

Der Aerosolraumboden ist beispielsweise kegelförmig oder kegelmantelförmig angeordnet und/oder ausgebildet.

Der Aerosolraumboden ist vorzugsweise so gestaltet, dass dieser eine Zyklonwirkung innerhalb des Aerosolgehäuses erzeugt und/oder verstärkt.

Vorteilhaft kann es sein, wenn die Zuführvorrichtung in dem Aerosolraumboden angeordnet ist.

Günstig kann es sein, wenn die Aerosolvorrichtung mehrere Transportkanalanschlüsse und/oder Transportkanäle umfasst, welche voneinander verschiedene Durchmesser aufweisen, so dass insbesondere wahlweise verschiedene Aerosolvarianten mit unterschiedlichen Tröpfchengrößenverteilungen des Aerosols insbesondere möglichst beeinträchtigungsfrei abführbar und/oder transportierbar sind.

Unter der Formulierung "möglichst beeinträchtigungsfrei" ist insbesondere zu verstehen, dass die Tröpfchengrößenverteilung des Aerosols an einem dem Aerosolgehäuse zugewandten Anfangsbereich der Transportkanäle zumindest näherungsweise einer Tröpfchengrößenverteilung des Aerosols an einem dem Aerosolgehäuse abgewandten Ende der Transportkanäle entspricht. "Zumindest näherungsweise" bezeichnet dabei eine Abweichung von höchstens ungefähr 20 %, beispielsweise höchstens ungefähr 10 %, der für die Tröpfchengrößenverteilung maßgeblichen Werte.

Günstig kann es sein, wenn die Aerosolvorrichtung eine Steuervorrichtung umfasst, mittels welcher eine Tröpfchengrößenverteilung und/oder ein Volumenstrom des erzeugten und/oder bereitgestellten Aerosols gezielt einstellbar ist.

Mittels der Steuervorrichtung ist hierzu insbesondere Einfluss nehmbar auf die eine oder die mehreren Aerosoldüsen und/oder die Zuführvorrichtung zur Zuführung des Zusatzstoffs, insbesondere des Liquids.

Beispielsweise kann mittels der Steuervorrichtung gezielt ein Aerosol mittels der einen oder der mehreren Aerosoldüsen erzeugt und durch gezielte Zuführung des Zusatzstoffs mittels der Zuführvorrichtung hinsichtlich der Tröpfchengrößenverteilung optimiert werden.

Durch geeignete Auswahl der Transportkanäle zur Zuführung des so erzeugten Aerosols an einen Bereitstellungsort kann mittels der Steuervorrichtung vorzugsweise zudem gewährleistet werden, dass das im Aerosolgehäuse erzeugte Aerosol in möglichst unveränderter Zusammensetzung bis zum Bereitstellungsort gelangt.

Mittels der Steuervorrichtung ist das Aerosol hinsichtlich seiner Tröpfchengrößenverteilung und/oder des Volumenstroms vorzugsweise durch Folgendes einstellbar, insbesondere steuerbar und/oder regelbar:
Variation der Volumenströme und/oder der Drücke des Transportgases oder des Liquids für die eine oder die mehreren Aerosoldüsen; und/oder
Variation eines Volumenstroms und/oder eines Drucks eines zusätzlich zu dem Transportgas in den Innenraum eingeleiteten Zusatzgasstroms; und/oder
Variation eines Volumenstroms und/oder eines Drucks eines zusätzlich über eine Zuführvorrichtung zugeführten Zusatzstoffs, insbesondere Liquids; und/oder
Auswahl einzelner oder mehrerer Transportkanalanschlüsse und/oder Transportkanäle zur Abführung des Aerosols.

Ein oder mehrere Transportkanäle, das Aerosolgehäuse, insbesondere eine Außenwandung und/oder die Trennwandung und/oder der Aerosolraumboden, und/oder die Zuführvorrichtung und/oder die eine oder die mehreren Aerosoldüsen sind vorzugsweise temperierbar, beispielsweise kühlbar oder heizbar. Hierdurch kann vorzugsweise wahlweise entweder das Transportgas und/oder das Liquid und/oder der Zusatzstoff und/oder das Aerosol temperiert, insbesondere gekühlt oder erhitzt, werden.

Als Zusatzstoff, welcher mittels der Zuführvorrichtung zuführbar ist, kann einerseits das zur Erzeugung des Aerosols mittels der einen oder der mehreren Aerosoldüsen verwendete Liquid vorgesehen sein.

Ein solches Liquid ist insbesondere ein Schmiermittel, beispielsweise Öl.

Alternativ oder ergänzend hierzu kann vorgesehen sein, dass der Zusatzstoff ein Gas, insbesondere Luft, Stickstoff, Kohlenstoffdioxid (CO₂), umfasst oder hieraus gebildet ist.

Zudem kann vorgesehen sein, dass der Zusatzstoff flüssig oder fest ist, beispielsweise kann der Zusatzstoff hierdurch zur Kühlung des Aerosols verwendet werden. Der Zusatzstoff ist beispielsweise Flüssigstickstoff oder Kohlenstoffdioxid (CO₂) im festen Aggregatzustand (sogenannter CO₂-Schnee).

Ein Druck im Innenraum des Aerosolgehäuses kann vorzugsweise mittels der Steuervorrichtung eingestellt, gesteuert und/oder geregelt werden. Insbesondere kann eine Druckvariation zur Anpassung, Einstellung und/oder Steuerung der Aerosolmenge, der Tröpfchengrößenverteilung, des Aerosolmassenstroms und/oder des Aerosolvolumenstroms erfolgen.

Der Druck im Innenraum des Aerosolgehäuses beträgt insbesondere vor und/oder während der Erzeugung von Aerosol und/oder vor und/oder während der Bereitstellung von Aerosol beispielsweise mindestens ungefähr 10 bar, insbesondere mindestens ungefähr 15 bar, vorzugsweise mindestens ungefähr 20 bar.

Alternativ oder ergänzend hierzu kann vorgesehen sein, dass der Druck im Innenraum des Aerosolgehäuses insbesondere vor und/oder während der Erzeugung von Aerosol und/oder vor und/oder während der Bereitstellung von Aerosol beispielsweise höchstens ungefähr 35 bar, insbesondere höchstens ungefähr 30 bar, vorzugsweise höchstens ungefähr 25 bar, beträgt.

Insbesondere kann ein Betrieb der Aerosolvorrichtung in einem Druckbereich zwischen ungefähr 10 bar und ungefähr 25 bar realisiert werden.

Zur Erzeugung des Drucks kann insbesondere geeignet komprimiertes und/oder unter Druck gesetztes Gas, insbesondere Transportgas, beispielsweise Zerstäubungsluft, zu dem Innenraum des Aerosolgehäuses zugeführt werden.

Das Aerosol, welches insbesondere mittels der Aerosoldüsen erzeugbar und nach Durchströmen der Abscheidevorrichtung erhältlich ist, weist vorzugsweise eine Tröpfchengrößenverteilung auf, bei welcher die am häufigsten auftretende Tröpfchengröße vorzugsweise geringer als 10 µm insbesondere geringer als 5 µm, beispielsweise geringer als 1 µm, ist.

Hiervon zu unterscheiden sind insbesondere Liquidtropfen, welche beispielsweise mittels der Zuführvorrichtung erzeugbar sind. Liquidtropfen weisen vorzugsweise eine Tröpfchengrößenverteilung auf, bei welcher die am häufigsten auftretende Tröpfchengröße größer 20 µm, insbesondere größer 50 µm, vorzugsweise größer 100 µm, beträgt.

Beispielsweise mittels der Zuführvorrichtung zugeführte Liquidtropfen bilden vorzugsweise Wandliquid, insbesondere Wandöl, welches in den Transportkanälen an den Wänden entlang geführt wird, insbesondere strömt.

Die im Aerosol befindlichen Tröpfchen werden vorzugsweise mit dem Transportgas mittransportiert und kommen nicht mit einer Wand des Transportkanals in Kontakt.

Die erfindungsgemäße Aerosolvorrichtung eignet sich insbesondere zur Verwendung in einem Minimalmengenschmiersystem.

Ein solches Minimalmengenschmiersystem kann insbesondere in einer Werkzeugmaschine zum Einsatz kommen.

Die vorliegende Erfindung betrifft daher auch ein Minimalschmiermengensystem sowie eine Werkzeugmaschine, welche ein solches Minimalmengenschmiersystem umfasst.

Die vorliegende Erfindung betrifft ferner ein Verfahren zum Bereitstellen eines Aerosols.

Der Erfindung liegt diesbezüglich die Aufgabe zugrunde, ein Aerosol mit optimierter Zusammensetzung bereitzustellen.

Diese Aufgabe wird erfindungsgemäß durch ein Verfahren gemäß dem unabhängigen Verfahrensanspruch gelöst.

Das erfindungsgemäße Verfahren umfasst Folgendes:
Erzeugen eines Aerosols mittels einer oder mehrerer Aerosoldüsen, wobei das Aerosol in einen Innenraum eines Aerosolgehäuses einströmt;
Abscheiden von Liquidtröpfchen aus dem Aerosol mittels einer in dem Innenraum des Aerosolgehäuses angeordneten Abscheidevorrichtung;
Abführen des Aerosols aus dem Innenraum über einen oder mehrere Transportkanalanschlüsse zum Anschließen eines oder mehrerer Transportkanäle.

Erfindungsgemäß ist vorgesehen, dass der Innenraum des Aerosolgehäuses einen Ringstrombereich und einen Zentralbereich umfasst, wobei der Ringstrombereich und der Zentralbereich mittels einer Trennwandung räumlich voneinander getrennt sind und wobei der Ringstrombereich den Zentralbereich ringförmig umgibt, wobei das Aerosol in dem Ringstrombereich des Innenraums zunächst zum Abscheiden von Liquidtröpfchen in einem Ringstrom oder Spiralstrom oder Helikalstrom geführt, dann in den innerhalb des Ringstroms oder Spiralstroms oder Helikalstroms angeordneten Zentralbereich des Innenraums umgelenkt und schließlich dem einen oder den mehreren Transportkanalanschlüssen zugeführt wird. Die Umlenkung erfolgt insbesondere an einem bezüglich der Schwerkraftrichtung unteren Ende der Trennwandung.

Günstig kann es sein, wenn dem im Innenraum des Aerosolgehäuses, insbesondere in dem Zentralbereich des Innenraums des Aerosolgehäuses, geführten Aerosol ein Zusatzstoff, insbesondere ein Liquid, zugeführt wird.

Insbesondere wird der Zusatzstoff derart zu dem Aerosol zugeführt, dass ein Median der Tröpfchengrößenverteilung des Zusatzstoffs mindestens eine Größenordnung über dem Median der Tröpfchengrößenverteilung des Aerosols liegt.

Das aus dem Innenraum des Aerosolgehäuses abgeführte Aerosol umfasst vorzugsweise einerseits Liquidtröpfchen, welche mittels der einen oder der mehreren Aerosoldüsen erzeugt wurden, und andererseits Liquidtropfen, welche mittels der Zuführvorrichtung erzeugt wurden.

Ein mittlerer Durchmesser der Liquidtropfen beträgt vorzugsweise mindestens ungefähr das 10-Fache, insbesondere mindestens ungefähr das 50-Fache, eines mittleren Durchmessers der Liquidtröpfchen.

Die Liquidtropfen werden vorzugsweise derart in den Innenraum eingeleitet, dass diese zusammen mit dem Aerosol oder lediglich mittels Transportgas zu dem einen oder den mehreren Transportkanalanschlüssen und schließlich den Transportkanälen geführt werden.

Bei dem erfindungsgemäßen Verfahren ist vorzugsweise vorgesehen, dass mittels einer Steuervorrichtung wahlweise die Tröpfchengrößenverteilung des Aerosols variiert wird, insbesondere durch
a) Variation der Volumenströme und/oder der Drücke des Transportgases und/oder des Liquids für die eine oder die mehreren Aerosoldüsen; und/oder
b) Variation eines Volumenstroms und/oder eines Drucks eines zusätzlich zu dem Transportgas in den Innenraum eingeleiteten Zusatzgasstroms; und/oder
c) Variation eines Volumenstroms und/oder eines Drucks eines zusätzlich über eine Zuführvorrichtung zugeführten Zusatzstoffs, insbesondere Liquids; und/oder
d) Auswahl einzelner oder mehrerer Transportkanalanschlüsse und/oder Transportkanäle zur Abführung des Aerosols.

Das Aerosol wird vorzugsweise an einem Bereitstellungsort bereitgestellt.

Der Bereitstellungsort ist vorzugsweise an einem gemeinsamen Ende mehrerer Transportkanäle angeordnet.

Abhängig von einem gewünschten Liquidvolumenstrom und/oder Liquidmassenstrom und/oder Aerosolvolumenstrom und/oder Aerosolmassenstrom und/oder abhängig von einer gewünschten Tröpfchengrößenverteilung des Aerosols werden vorzugsweise unterschiedliche Anzahlen von Transportkanälen und/oder unterschiedlich dimensionierte Transportkanäle zur Bereitstellung des Aerosols an dem Bereitstellungsort verwendet.

Die Transportkanäle verbinden vorzugsweise alle gleichzeitig oder zumindest mehrere gleichzeitig den Innenraum des Aerosolgehäuses mit dem Bereitstellungsort. Zur Auswahl eines oder mehrerer Transportkanäle zur Bereitstellung eines Aerosols mit einer gewünschten Tröpfchengrößenverteilung ist somit vorzugsweise kein Austausch eines Transportkanals oder eine Ergänzung oder Entfernung eines Transportkanals erforderlich. Es kann vorzugsweise einfach, beispielsweise mittels einer Ventilvorrichtung, umgeschaltet werden zwischen einzelnen Transportkanälen und/oder mehreren Transportkanälen sowie wahlweise zwischen einzelnen der Transportkanäle.

Beispielsweise kann vorgesehen sein, dass in einem Betrieb der Aerosolvorrichtung, in welchem eine große Schmiermittelmenge benötigt wird, welche insbesondere über eine große Menge von zugeführtem Zusatzstoff bereitgestellt wird, ein oder mehrere Transportkanäle zur Bereitstellung des Schmiermittels an dem Bereitstellungsort verwendet werden. Wenn nun kurzfristig eine deutlich geringere Schmiermittelmenge benötigt wird, kann vorzugsweise auf ein oder mehrere andere Transportkanäle umgeschaltet werden, insbesondere um die weitere Förderung der noch in den einen oder den mehreren Transportkanälen geförderten Liquidtröpfchen und/oder Liquidtropfen zu unterbinden.

Insbesondere kann eine unerwünschte Nachförderung von großen Liquidtropfen, insbesondere Wandöl, zu dem Bereitstellungsort durch die Umschaltung auf einen anderen Transportkanal oder mehrere andere Transportkanäle vermieden werden.

Die erfindungsgemäße Aerosolvorrichtung ist insbesondere ein sogenanntes 1-KanalSystem, in welchem die Förderung von Transportgas einerseits und Liquid, insbesondere in Form von Liquidtröpfchen, andererseits ausgehend von der Aerosolvorrichtung gemeinsam und somit stofflich nicht getrennt erfolgt.

Die Aerosolvorrichtung eignet sich insbesondere zur Verwendung in zerspanenden Werkzeugmaschinen.

Als Aerosol ist vorliegend vorzugsweise ein Stoffgemisch zu verstehen, welches ein Gas, insbesondere Transportgas, und Liquidtröpfchen, insbesondere Öltröpfchen, umfasst. Eine Schwebezeit der Liquidtröpfchen beträgt vorzugsweise mindestens ungefähr 5 Sekunden, beispielsweise mindestens ungefähr 10 Sekunden, vorzugsweise mindestens ungefähr 15 Sekunden.

Eine Fördergeschwindigkeit des Aerosols in den Transportkanälen beträgt vorzugsweise höchstens ungefähr 50 m/Sek, insbesondere höchstens ungefähr 40 m/Sek, vorzugsweise höchstens ungefähr 30 m/Sek.

Insbesondere dann, wenn große Liquidmengen, insbesondere Schmiermittelmengen, bereitgestellt werden sollen, kann dies durch Zuführung von Liquid realisiert werden, welches beispielsweise ausschließlich über die Zuführvorrichtung in den Innenraum des Aerosolgehäuses eingeleitet wurde. Zur zügigen Förderung des Liquids kann dann beispielsweise eine Fördergeschwindigkeit von mindestens ungefähr 60 m/Sek, vorzugsweise mindestens ungefähr 80 m/Sek, insbesondere mindestens ungefähr 100 m/Sek, vorgesehen sein.

Vorzugsweise kann zwischen a) einem reinen Aerosolbetrieb ohne die Zuführung des Zusatzstoffs, b) einem reinen Zusatzstoffbetrieb und c) einem Mischbetrieb, in welchem sowohl Aerosol als auch Zusatzstoff zugeführt wird, umgeschaltet werden.

Beispielsweise kann vorgesehen sein, dass die eine oder die mehreren Aerosoldüsen einerseits und die Zuführvorrichtung andererseits getrennt voneinander zu- und abschaltbar sind.

Insbesondere sind die eine oder mehreren Aerosoldüsen einerseits und die Zuführvorrichtung andererseits wahlweise einzeln oder auch gemeinsam zuschaltbar oder abschaltbar.

Die Ansteuerung mehrerer Aerosoldüsen erfolgt vorzugsweise mittels mehrerer Ventile.

Vorzugsweise sind mehrere Ventile vorgesehen, welche unterschiedliche Anzahlen der Aerosoldüsen ansteuern.

Sämtliche Aerosoldüsen sind vorzugsweise auf minimalen Transportgasverbrauch sowie zur Optimierung der Aerosolzusammensetzung, insbesondere der Tröpfchengrößenverteilung, optimiert, insbesondere um eine maximale Aerosoldichte zu erzeugen.

Die Aerosolvorrichtung kann durch gezielte Zuschaltung oder Abschaltung einzelner oder mehrerer Aerosoldüsen wahlweise unterschiedliche Aerosolvolumenströme und/oder Aerosolmassenströme für einen oder mehrere Bereitstellungsorte erzeugen, insbesondere ohne die Aerosolqualität, insbesondere eine Tröpfchengrößenverteilung, zu beeinträchtigen.

Die Aerosolvorrichtung umfasst vorzugsweise eine Abscheidevorrichtung, welche insbesondere einen oder mehrere Durchströmungskörper umfasst.

Ein Durchströmungskörper ist insbesondere ein Objekt, welches im Betrieb der Aerosolvorrichtung mit Aerosol durchströmt wird.

Aufgrund des Durchströmens ergibt sich vorzugsweise eine Abscheidung und/oder eine Größenselektion zur Beeinflussung der (Liquid-) Tröpfchengrößenverteilung.

Ein Durchströmungskörper kann beispielsweise ein Lochplattenelement sein.

Insbesondere sind mehrere kaskadiert angeordnete Lochplattenelemente vorgesehen, welche insbesondere nacheinander mit dem Aerosol durchströmbar sind.

Alternativ oder ergänzend hierzu kann eine Strömungsumlenkung mittels eines oder mehrerer Durchströmungskörper erzielt werden.

Ein Lochplattenelement kann beispielsweise im Wesentlichen kegelstumpfmantelförmig oder kegelmantelförmig ausgebildet sein.

Vorzugsweise ist ein Lochplattenelement ein Lochblech.

Alternativ oder ergänzend hierzu kann vorgesehen sein, dass ein Durchströmungskörper einen Bürstenabscheider bildet oder umfasst.

Ein Bürstenabscheider umfasst insbesondere eine Vielzahl von Borsten und/oder Vorsprüngen, beispielsweise stabförmigen Vorsprüngen, welche im Betrieb der Aerosolvorrichtung von Aerosol umströmt werden, insbesondere zur Beeinflussung einer (Liquid-)Tröpfchengrößenverteilung.

Ein oder mehrere Durchströmungskörper sind insbesondere in einem von der Trennwandung umgebenen Raumbereich, insbesondere einem Zentralbereich, angeordnet.

Vorzugsweise umgibt die Trennwandung den einen oder die mehreren Durchströmungskörper im Wesentlichen ringförmig und/oder zylindermantelförmig.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Aerosolvorrichtung;
- Fig. 2: eine schematische perspektivische Darstellung eines Aerosolgehäuses der Aerosolvorrichtung aus Fig. 1;
- Fig. 3: einen schematischen vertikalen Längsschnitt durch das Aerosolgehäuse aus Fig. 2;
- Fig. 4: einen weiteren schematischen vertikalen Längsschnitt durch das Aerosolgehäuse aus Fig. 2;
- Fig. 5: einen schematischen horizontalen Schnitt durch das Aerosolgehäuse aus Fig. 2;
- Fig. 6: einen der Fig. 4 entsprechenden schematischen vertikalen Längsschnitt durch eine alternative Ausgestaltung der Aerosolvorrichtung;
- Fig. 7: eine schematische teiltransparente Darstellung eines Entnahmeelements des Aerosolgehäuses;
- Fig. 8: eine schematische Draufsicht auf eine Unterseite des Entnahmeelements aus Fig. 7; und
- Fig. 9: einen der Fig. 4 entsprechenden schematischen vertikalen Längsschnitt durch eine weitere alternative Ausgestaltung der Aerosolvorrichtung.

Gleiche oder funktional äquivalente Elemente sind in sämtlichen Figuren mit denselben Bezugszeichen versehen.

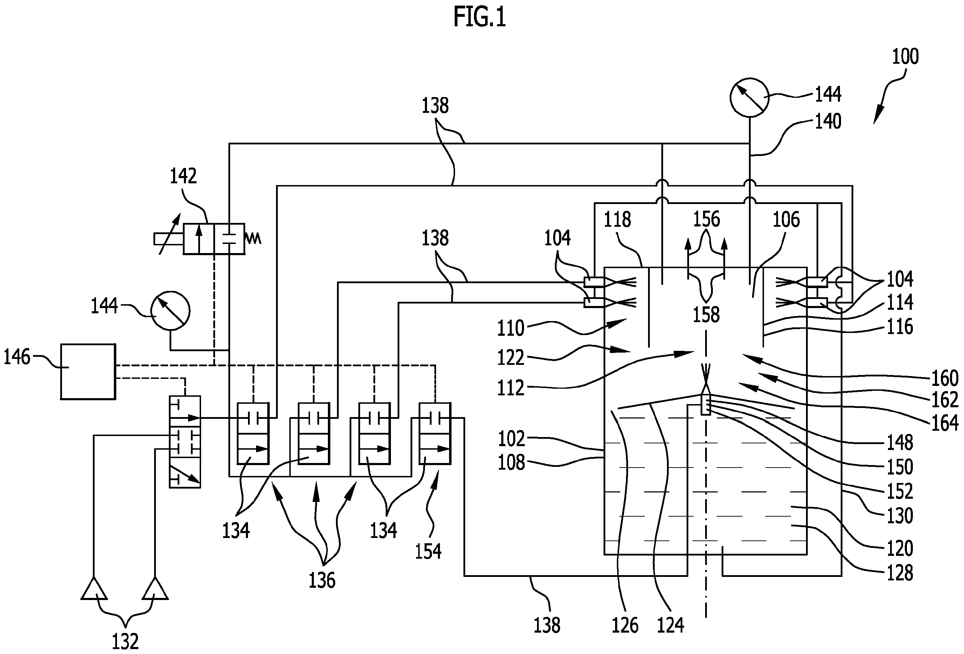

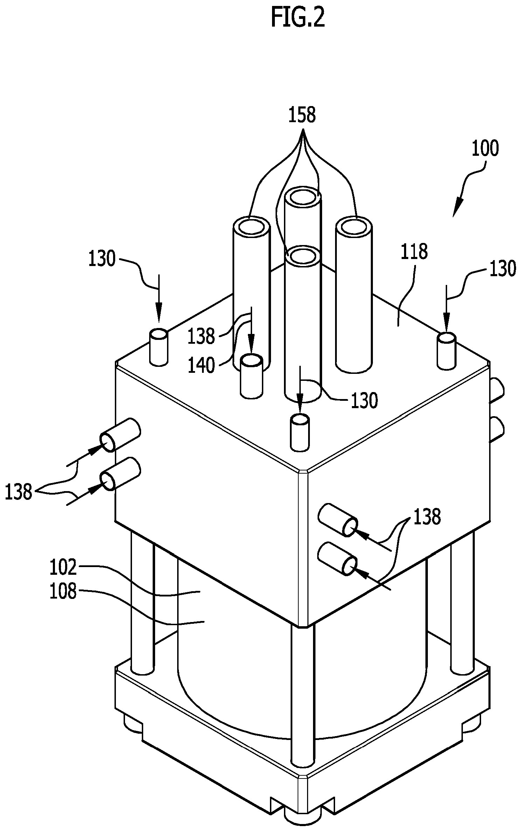

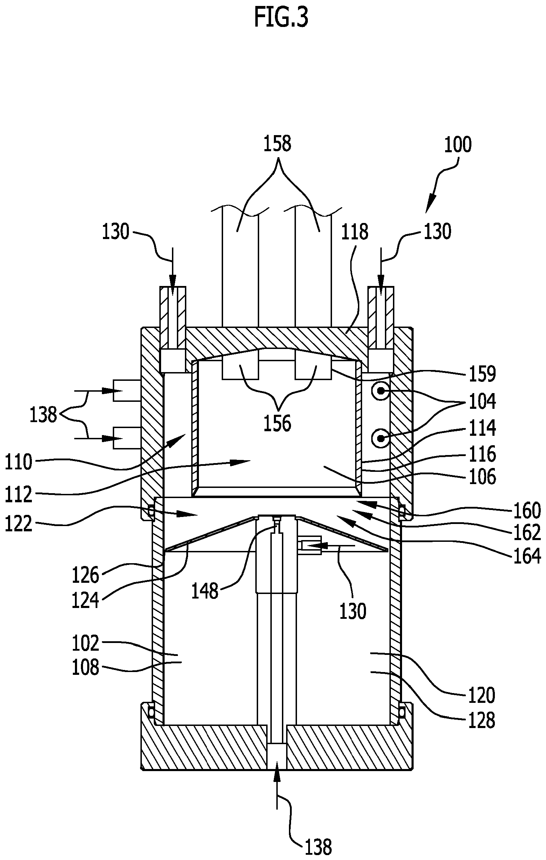

Eine in den Fig. 1 bis 5 dargestellte Ausführungsform einer als Ganzes mit 100 bezeichneten Aerosolvorrichtung ist beispielsweise Bestandteil eines Minimalmengenschmiersystems zum Schmieren von Werkzeugen.

Die Aerosolvorrichtung 100 kann beispielsweise als Bestandteil einer Werkzeugmaschine vorgesehen sein.

Die Aerosolvorrichtung 100 umfasst ein Aerosolgehäuse 102, in welchem ein bereitzustellendes Aerosol erzeugt wird.

Die Aerosolvorrichtung 100 umfasst ferner mehrere Aerosoldüsen 104, welche in einen Innenraum 106 des Aerosolgehäuses 102 hinein gerichtet sind.

Die Aerosoldüsen 104 sind dabei insbesondere in einem bezüglich der Schwerkraftrichtung oberen Bereich des Aerosolgehäuses 102 angeordnet.

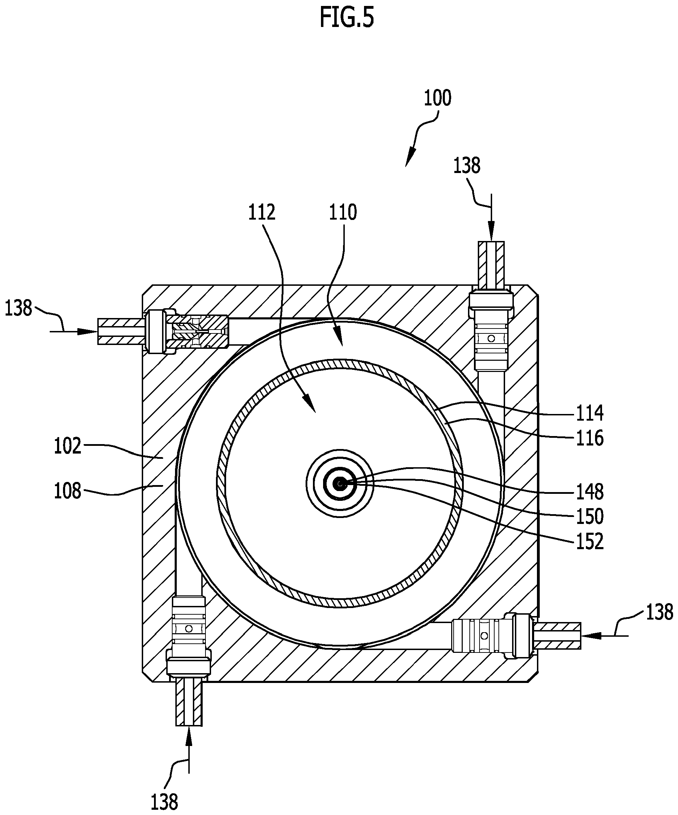

Wie insbesondere Fig. 5 zu entnehmen ist, sind die Aerosoldüsen 104 im Wesentlichen tangential zu einer Außenwandung 108 des Aerosolgehäuses 102 angeordnet.

Die Aerosoldüsen 104 ermöglichen somit insbesondere die Ausbildung eines Ringstroms innerhalb des Innenraums 106 des Aerosolgehäuses 102.

Der Innenraum 106 des Aerosolgehäuses 102 ist in mehrere Bereiche unterteilt.

Insbesondere umfasst der Innenraum 106 einen Ringstrombereich 110, in welchen die Aerosoldüsen 104 münden.

Der Ringstrombereich 110 umgibt einen Zentralbereich 112 des Innenraums 106.

Insbesondere sind der Ringstrombereich 110 und der Zentralbereich 112 mittels einer Trennwandung 114 voneinander getrennt.

Die Trennwandung 114 ist insbesondere ein Trennzylinder 116.

Die Trennwandung 114 ist insbesondere an einer Deckenwandung 118 des Aerosolgehäuses 102 angeordnet und erstreckt sich ausgehend von der Deckenwandung 118 in der Schwerkraftrichtung nach unten.

Der Innenraum 106 des Aerosolgehäuses 102 umfasst ferner einen Sammelbereich 120, in welchem sich aus dem Aerosol abgeschiedenes Liquid, insbesondere Öl, sammeln kann.

Der Ringstrombereich 110 und der Zentralbereich 112 sind Bestandteil eines Aerosolraums oder Aerosolbereichs 122 des Innenraums 106.

Der Aerosolbereich 122 und der Sammelbereich 120 sind insbesondere mittels eines Aerosolraumbodens 124 voneinander getrennt.

Der Aerosolraumboden 124 ist insbesondere eine horizontale Trennwandung, welche den Sammelbereich 120 nach oben hin begrenzt.

Der Aerosolraumboden 124 ist insbesondere durchlässig, so dass im Aerosolbereich 122 abgeschiedenes Liquid nach unten in den Sammelbereich 120 gelangen kann. Beispielsweise ist zwischen der Außenwandung 108 des Aerosolgehäuses 102 und dem Aerosolraumboden 124 ein Ringspalt gebildet.

Der Ringspalt ist insbesondere ein Ablaufspalt 126.

Der Sammelbereich 120 bildet insbesondere ein Liquidreservoir 128. Aus dem Liquidreservoir 128 wird insbesondere über eine oder mehrere Liquidleitungen 130 Liquid zu den Aerosoldüsen 104 zugeführt.

Ferner umfasst die Aerosolvorrichtung 100 vorzugsweise eine Transportgasquelle 132, mittels welcher ein Transportgas, insbesondere Druckluft, bereitgestellt wird.

Ein oder mehrere Ventilvorrichtungen 134 dienen der Zuführung des Transportgases zu den Aerosoldüsen 104.

Diese Ventilvorrichtungen 134 sind insbesondere Aerosolventile 136.

Die Verbindung zwischen den Aerosolventilen 136 und den Aerosoldüsen 104 sind insbesondere durch Gasleitungen 138 gebildet.

Ferner kann eine Zusatzgasführung 140 der Aerosolvorrichtung 100 vorgesehen sein.

Die Zusatzgasführung 140 ermöglicht insbesondere die Zuführung von zusätzlichem Transportgas von der Transportgasquelle 132 in den Zentralbereich 112 des Innenraums 106.

Zur Variation eines Volumenstroms des über die Zusatzgasführung 140 zugeführten Transportgases kann insbesondere ein Proportionalventil 142 in einer Gasleitung 138 der Zusatzgasführung 140 vorgesehen sein.

Ein oder mehrere Manometer 144 dienen schließlich noch der Überwachung und/oder Steuerung der Aerosolvorrichtung 100.

Zudem umfasst die Aerosolvorrichtung 100 vorzugsweise eine Steuervorrichtung 146, mittels welcher insbesondere die gesamte Aerosolvorrichtung 100 steuerbar und/oder regelbar ist.

Die Aerosolvorrichtung 100 umfasst zudem vorzugsweise eine Zuführvorrichtung 148 zur Zuführung eines Zusatzstoffs zu dem im Aerosolgehäuse 102 erzeugten Aerosol.

Die Zuführvorrichtung 148 ist insbesondere in dem Aerosolraumboden 124 angeordnet und/oder in den Zentralbereich 112 des Innenraums 106 hineingerichtet.

Die Zuführvorrichtung 148 umfasst vorzugsweise eine Aerosoldüse 150 und/oder eine Sprühdüse 152.

Mittels einer Aerosoldüse 150 kann insbesondere ein fein vernebeltes Liquid in den Zentralbereich 112 und das darin angeordnete Aerosol eindosiert werden.

Mittels der Sprühdüse 152 kann vorzugsweise ein Liquid in Tropfenform mit im Vergleich zum Aerosol großen Tropfengrößen in den Zentralbereich 112 und das darin geführte Aerosol und/oder Transportgas eingeleitet werden.

Mittels einer als Wandölventil 154 ausgebildeten Ventilvorrichtung 134 kann vorzugsweise die Menge des über die Zuführvorrichtung 148 zugeführten Zusatzstoffs gesteuert und/oder geregelt werden. Ferner ist hierdurch vorzugsweise eine Tröpfchengröße eines über die Zuführvorrichtung 148 zugeführten Aerosols oder Sprays einstellbar.

Die Aerosolvorrichtung 100 umfasst ferner ein oder mehrere Transportkanalanschlüsse 156 zum Anschließen eines oder mehrerer Transportkanäle 158.

Über diese Transportkanalanschlüsse 156 sowie die Transportkanäle 158 kann insbesondere das im Innenraum 106 des Aerosolgehäuses 102 erzeugte Aerosol abgeführt und zu einem (nicht dargestellten) Bereitstellungsort zugeführt werden.

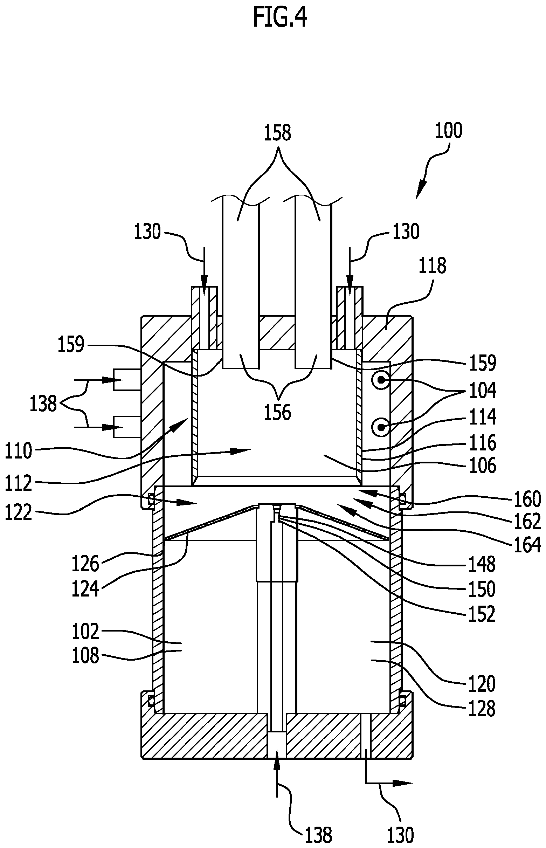

Wie insbesondere Fig. 4 zu entnehmen ist, können die Transportkanalanschlüsse 156 und/oder die Transportkanäle 158 ein oder mehrere Auslassstutzen 159 aufweisen, welche insbesondere in den Innenraum 106 des Aerosolgehäuses 102 hineinragen.

Hierdurch kann insbesondere direkt im Zentralbereich 112 Aerosol aufgenommen und abgeführt werden.

Die in den Fig. 1 bis 5 dargestellte Ausführungsform der Aerosolvorrichtung 100 funktioniert wie folgt:
Mittels der Aerosoldüsen 104 wird aus einem Transportgas und einem Liquid, insbesondere Öl, ein Aerosol erzeugt und in den Ringstrombereich 110 des Innenraums 106 des Aerosolgehäuses 102 eingeleitet.

Durch die tangentiale Anordnung und/oder Ausrichtung der Aerosoldüsen 104 ergibt sich im Ringstrombereich 110 vorzugsweise eine ringförmige oder helikale oder spiralförmige Aerosolströmung.

Das Aerosol strömt dabei insbesondere um die Trennwandung 114 herum und in der Schwerkraftrichtung nach unten.

Aufgrund der sich einstellenden Strömung ergibt sich eine Zentrifugalkraft, welche die größeren Tröpfchen im Aerosol radial nach außen zwingt, bis diese mit der Außenwandung 108 in Kontakt kommen und hieran abgeschieden werden.

Das abgeschiedene Liquid fließt dann an der Außenwandung 108 entlang und durch den Ablaufspalt 126 hindurch in den Sammelbereich 120.

Im Aerosol verbleibt dann ein Anteil der Tröpfchen mit geringerem Durchmesser.

Dieses Aerosol strömt dann unter der Trennwandung 114 hindurch in den Zentralbereich 112.

Über die Zuführvorrichtung 148 wird dem Aerosol dabei ein Zusatzstoff zugeführt.

Dieser Zusatzstoff ist insbesondere dasselbe Liquid, wie es bereits zur Aerosolerzeugung in den Aerosoldüsen 104 verwendet wurde.

Die Zuführvorrichtung 148 erzeugt dabei jedoch vorzugsweise Tropfen mit vergleichsweise großem Durchmesser. Insbesondere sind die mittels der Zuführvorrichtung 148 erzeugten Tropfen größer als die an der Außenwandung 108 abgeschiedenen Liquidtröpfchen des zunächst mittels der Aerosoldüsen 104 erzeugten Aerosols.

Die Aerosolvorrichtung 100 umfasst somit eine Abscheidevorrichtung 160, welche insbesondere als Zentrifugenabscheider 162 und/oder Umlenkabscheider 164 ausgebildet ist, um zunächst mittels der Aerosoldüsen 104 erzeugte Liquidtröpfchen, die in einem unerwünschten Größenbereich liegen, abzuscheiden.

Mittels der Zuführvorrichtung 148 werden dann im Anschluss beispielsweise Liquidtropfen zugeführt, welche vorzugsweise größer sind, insbesondere um mindestens eine Größenordnung größer, als die mittels der Abscheidevorrichtung 160 abgeschiedenen Liquidtröpfchen.

Durch die Kombination aus Aerosoldüsen 104 und Zuführvorrichtung 148 kann somit eine sehr spezielle Tröpfchengrößenverteilung im Zentralbereich 112 erzeugt werden.

Die Aerosoldüsen 104 und die Zuführvorrichtung 148 sind dabei wahlweise alternativ oder gemeinsam anschaltbar und/oder abschaltbar, um letztlich wahlweise verschiedene Tröpfchengrößenverteilungen im Zentralbereich 112 erzeugen zu können.

Das im Zentralbereich 112 angeordnete Aerosol kann schließlich über die Transportkanalanschlüsse 156 und die Transportkanäle 158 an einen oder mehrere Bereitstellungsorte geführt werden.

Insbesondere dann, wenn unterschiedlich dimensionierte Transportkanäle 158 vorgesehen sind, kann dieser Transport des Aerosols zum Bereitstellungsort an die Tröpfchengrößenverteilung angepasst werden, um letztlich auch am Bereitstellungsort eine gewünschte Aerosolzusammensetzung zu gewährleisten.

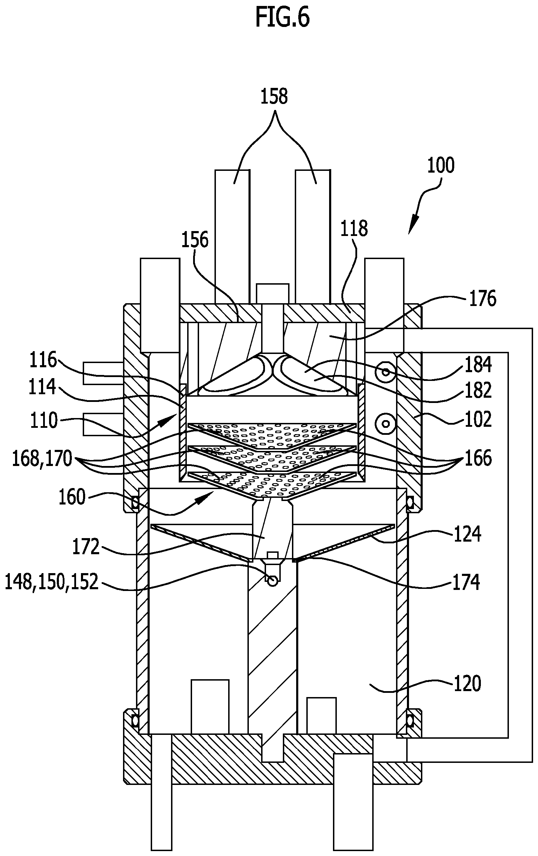

Eine in den Fig. 6 bis 8 dargestellte alternative Ausgestaltung einer Aerosolvorrichtung 100 unterscheidet sich von der in den Fig. 1 bis 5 dargestellten Ausführungsform im Wesentlichen dadurch, dass die Abscheidevorrichtung 160 alternativ oder ergänzend zu den bislang beschriebenen Merkmalen der Abscheidevorrichtung 160 gemäß der in den Fig. 1 bis 5 dargestellten Ausführungsform einen oder mehrere Durchströmungskörper 166 umfasst.

Die Durchströmungskörper 166 sind insbesondere in dem Innenraum 106 des Aerosolgehäuses 102 angeordnet und vorzugsweise von der Trennwandung 114, insbesondere dem Trennzylinder 116, umgeben.

Die Durchströmungskörper 166 sind vorzugsweise bezüglich einer Strömungsrichtung des Aerosols im Innenraum 106 hintereinander angeordnet, so dass die Durchströmungskörper 166 nacheinander mit dem Aerosol durchströmt werden.

Jeder Durchströmungskörper 166 ist beispielsweise als ein Lochplattenelement 168, insbesondere als ein Lochblech 170, ausgebildet.

Vorzugsweise ist jeder Durchströmungskörper 166 im Wesentlichen kegelmantelförmig und/oder kegelstumpfmantelförmig ausgebildet, wobei eine Spitze (Kegelspitze) vorzugsweise in der Schwerkraftrichtung nach unten zeigt.

Die Durchströmungskörper 166 sind vorzugsweise mittels eines oder mehrerer Auflageelemente 172 in dem Innenraum 106 festgelegt und/oder relativ zueinander festgelegt.

Die Durchströmungskörper 166 weisen vorzugsweise eine Vielzahl von Durchtrittsöffnungen auf, welche von dem Aerosol durchströmt werden, wodurch letztendlich eine Abscheidung von Liquid erzielt werden kann.

Durch geeignete Auswahl der Lochdurchmesser ergibt sich vorzugsweise eine gewünschte Beeinflussung und/oder Auswahl der (Liquid-)Tröpfchengrößenverteilung.

Bei der in den Fig. 6 bis 8 dargestellten Ausführungsform ist ferner vorgesehen, dass der Aerosolraumboden 124 im Wesentlichen kegelstumpfförmig oder kegelstumpfmantelförmig ausgebildet ist, wobei eine Kegelspitze 174 des Aerosolraumbodens 124 vorzugsweise in der Schwerkraftrichtung nach unten zeigt.

Mittels des Aerosolraumbodens 124 kann vorzugsweise eine Zyklonwirkung innerhalb des Innenraums 106 des Aerosolgehäuses 102 erzeugt und/oder verstärkt werden.

Ein Ablaufspalt 126 oder eine Ablauföffnung ist dann vorzugsweise an einem der Kegelspitze 174 zugewandten radial inneren Bereich des Aerosolraumbodens 124 angeordnet.

Ferner unterscheidet sich die in den Fig. 6 bis 8 dargestellte Ausführungsform der Aerosolvorrichtung 100 durch eine alternative Aerosolabführung.

Insbesondere eine Deckenwandung 118 des Aerosolgehäuses 102 ist hierbei vorzugsweise durch ein oder mehrere Zusatzbauteile oder durch geeignete Formgebung strömungsoptimiert.

Vorzugsweise umfasst die Aerosolvorrichtung 100 ein Entnahmeelement 176, mittels welchem das Aerosol aus dem Innenraum 106 des Aerosolgehäuses 102 abgeführt werden kann, insbesondere unter weitestgehender Vermeidung von Luftwirbeln und/oder Strömungsumlenkungen.

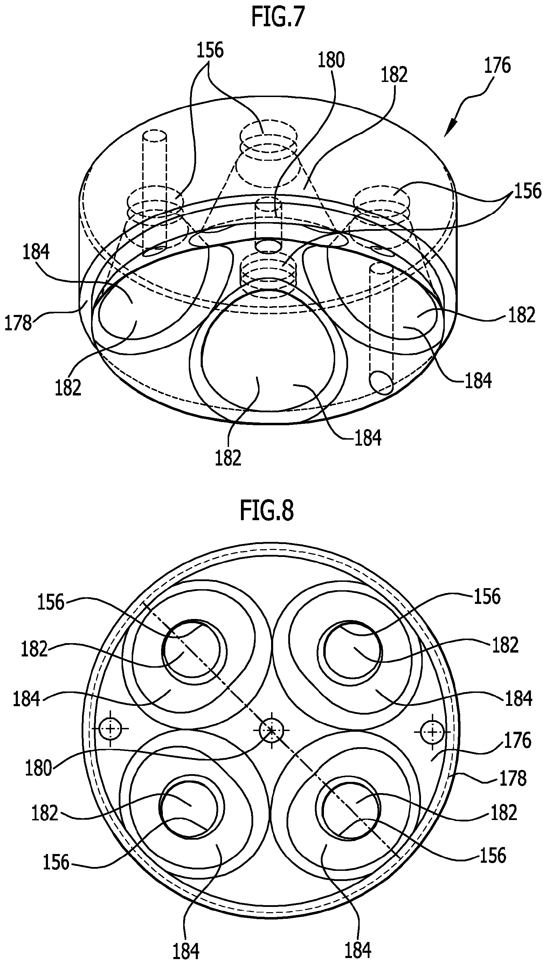

Das Entnahmeelement 176, welches separat in den Fig. 7 und 8 dargestellt ist, ist hierzu insbesondere ein im Wesentlichen zylindrisches Bauteil, welches einen Aufnahmebereich 178 zur Aufnahme der Trennwandung 114 umfasst und/oder mittels einer oder mehrerer Befestigungsstellen 180 an der Deckenwandung 118 des Aerosolgehäuses 102 festgelegt werden kann.

Das Entnahmeelement 176 umfasst insbesondere mehrere, beispielsweise vier, trichterförmige Einströmbereiche 182, welche Bestandteil von Auslassöffnungen 184 zur Abführung des Aerosols aus dem Innenraum 106 sind.

Die Auslassöffnungen 184 grenzen insbesondere an Transportkanalanschlüsse 156 und/oder Transportkanäle 158 an.

Vorzugsweise ist jedem Transportkanal 158 und/oder jedem Transportkanalanschluss 156 eine Auslassöffnung 184 mit separatem Einströmbereich 182 zugeordnet.

Das Entnahmeelement 176 weist insbesondere abgerundete Einströmbereiche 182 auf, insbesondere ohne Kanten, Ecken oder sonstige strömungsbeeinflussende Abschnitte.

Mittels der Einströmbereiche 182 des Entnahmeelements 176 kann den Transportkanälen 158 somit besonders effizient und verwirbelungsarm das Aerosol aus dem Innenraum 106 zugeführt werden.

Die Einströmbereiche 182 können an ihrer dem Innenraum 106 zugewandten Seite in eine kugelabschnittförmige Vertiefung des Entnahmeelements 176 münden.

Hierdurch kann ebenfalls die Verwirbelung oder sonstige Störung einer Strömung reduziert oder ganz vermieden werden.

Im Übrigen stimmt die in den Fig. 6 bis 8 dargestellte Ausführungsform der Aerosolvorrichtung 100 hinsichtlich Aufbau und Funktion mit der in den Fig. 1 bis 5 dargestellten Ausführungsform überein, so dass auf deren vorstehende Beschreibung insoweit Bezug genommen wird.

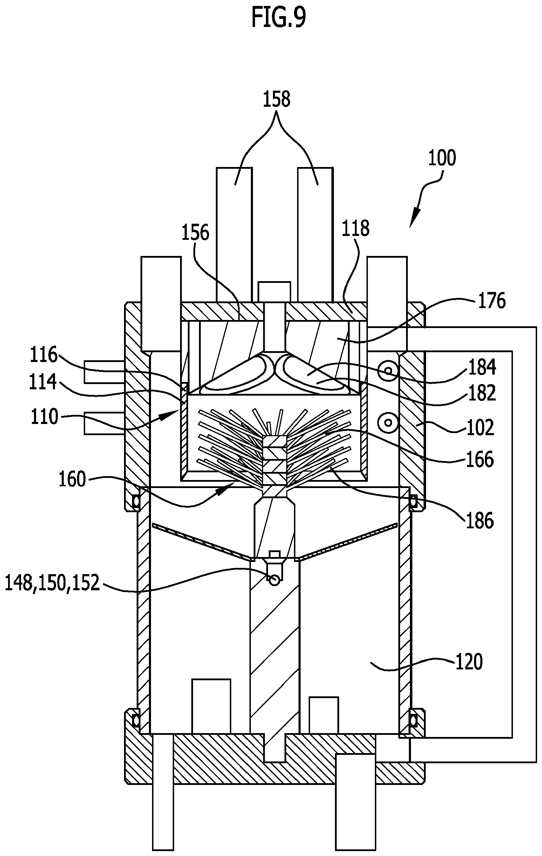

Eine in Fig. 9 dargestellte weitere alternative Ausgestaltung einer Aerosolvorrichtung 100 unterscheidet sich von der in den Fig. 6 bis 8 dargestellten Ausführungsform im Wesentlichen dadurch, dass anstelle von Lochplattenelementen 168 ein als Bürstenabscheider 186 ausgebildeter Durchströmungskörper 166 vorgesehen ist.

Der Bürstenabscheider 186 umfasst insbesondere eine Vielzahl von stabförmigen Vorsprüngen, welche insbesondere zentral miteinander verbunden sind.

Die stabförmigen Vorsprünge, insbesondere Borsten, sind vorzugsweise schräg zur Schwerkraftrichtung ausgerichtet. Hierdurch kann vorzugsweise ein einfaches Abfließen von abgeschiedenem Liquid ermöglicht werden. Insbesondere fließt das Liquid in radialer Richtung mittig zusammen und längs des Auflageelements 172 zur Lagerung des Bürstenabscheiders 186 nach unten in Richtung des Aerosolraumbodens 124 und schließlich in den Sammelbereich 120.

Im Übrigen stimmt die in Fig. 9 dargestellte Ausführungsform der Aerosolvorrichtung 100 hinsichtlich Aufbau und Funktion mit der in den Fig. 6 bis 8 dargestellten Ausführungsform überein, so dass auf deren vorstehende Beschreibung insoweit Bezug genommen wird.

Beispielsweise kann auch der Bürstenabscheider 186 aus der Ausführungsform gemäß Fig. 9 bei der in den Fig. 1 bis 5 dargestellten Ausführungsform vorgesehen sein.

### Bezugszeichenliste

- 100: Aerosolvorrichtung
- 102: Aerosolgehäuse
- 104: Aerosoldüse
- 106: Innenraum
- 108: Außenwandung
- 110: Ringstrombereich
- 112: Zentralbereich
- 114: Trennwandung
- 116: Trennzylinder
- 118: Deckenwandung
- 120: Sammelbereich
- 122: Aerosolbereich
- 124: Aerosolraumboden
- 126: Ablaufspalt
- 128: Liquidreservoir
- 130: Liquidleitung
- 132: Transportgasquelle
- 134: Ventilvorrichtung
- 136: Aerosolventil
- 138: Gasleitung
- 140: Zusatzgasführung
- 142: Proportionalventil
- 144: Manometer
- 146: Steuervorrichtung
- 148: Zuführvorrichtung
- 150: Aerosoldüse
- 152: Sprühdüse
- 154: Wandölventil
- 156: Transportkanalanschluss
- 158: Transportkanal
- 159: Auslassstutzen
- 160: Abscheidevorrichtung
- 162: Zentrifugenabscheider
- 164: Umlenkabscheider
- 166: Durchströmungskörper
- 168: Lochplattenelement
- 170: Lochblech
- 172: Auflageelement
- 174: Kegelspitze
- 176: Entnahmeelement
- 178: Aufnahmebereich
- 180: Befestigungsstelle
- 182: Einströmbereich
- 184: Auslassöffnung
- 186: Bürstenabscheider

## Patentansprüche

1. Aerosolvorrichtung (100), umfassend:
- ein Aerosolgehäuse (102);
- eine oder mehrere Aerosoldüsen (104) zur Erzeugung eines Aerosolstroms aus einem Transportgas und einem Liquid, wobei die eine oder die mehreren Aerosoldüsen (104) in einen Innenraum (106) des Aerosolgehäuses (102) hineingerichtet und/oder in dem Aerosolgehäuse (102) angeordnet sind;
- einen oder mehrere Transportkanalanschlüsse (156) zum Anschließen eines oder mehrerer Transportkanäle (158), mittels welcher das Aerosol aus dem Innenraum (106) des Aerosolgehäuses (102) abführbar ist,
wobei die Aerosolvorrichtung (100) eine Abscheidevorrichtung (160) zum Abscheiden von Liquidtröpfchen aus dem Aerosol umfasst, wobei die Abscheidevorrichtung (160) bezüglich einer Strömungsrichtung des Aerosols zwischen der einen oder den mehreren Aerosoldüsen (104) einerseits und dem einen oder den mehreren Transportkanälen (158) andererseits angeordnet ist, wobei der Innenraum (106) des Aerosolgehäuses (102) einen Ringstrombereich (110) und einen Zentralbereich (112) umfasst,
wobei der Ringstrombereich (110) und der Zentralbereich (112) mittels einer Trennwandung (114) räumlich voneinander getrennt sind und wobei der Ringstrombereich (110) den Zentralbereich (112) ringförmig umgibt,
wobei die eine oder die mehreren Aerosoldüsen (104) in den Ringstrombereich (110) hineingerichtet sind, und wobei der eine oder die mehreren Transportkanalanschlüsse (156) unmittelbar an den Zentralbereich (112) angrenzen,
**dadurch gekennzeichnet, dass**
die Aerosolvorrichtung (100) eine Zuführvorrichtung (148) zum Zuführen eines Zusatzstoffes, insbesondere des Liquids, zu dem Innenraum (106) des Aerosolgehäuses (102) umfasst, und dass die Zuführvorrichtung (148) in Schwerkraftrichtung direkt unter dem Zentralbereich (112) des Innenraums (106) des Aerosolgehäuses (102) angeordnet und/oder in den Zentralbereich (112) hineingerichtet ist.

2. Aerosolvorrichtung (100) nach Anspruch 1, **dadurch gekennzeichnet, dass**
a) die Abscheidevorrichtung (160) einen Zentrifugenabscheider (162) und/oder einen Umlenkabscheider (164) umfasst; und/oder
b) die Abscheidevorrichtung (160) einen oder mehrere Durchströmungskörper, insbesondere einen Bürstenabscheider und/oder ein oder mehrere Lochplattenelemente, umfasst.

3. Aerosolvorrichtung (100) nach Anspruch 1 oder 2, **dadurch gekennzeichnet, dass** der Innenraum (106) des Aerosolgehäuses (102) zumindest näherungsweise rotationssymmetrisch ausgebildet ist und/oder dass die eine oder die mehreren Aerosoldüsen (104) zumindest näherungsweise tangential in den Innenraum (106) hineingerichtet sind, so dass insbesondere ein ringförmig oder spiralförmig oder helikal rotierender Aerosolgasstrom im Innenraum (106) des Aerosolgehäuses (102) erzeugbar ist.

4. Aerosolvorrichtung (100) nach einem der Ansprüche 1 bis 3, **dadurch gekennzeichnet, dass** die Trennwandung (114) hohlzylinderförmig ausgebildet ist.

5. Aerosolvorrichtung (100) nach einem der Ansprüche 1 bis 4, **dadurch gekennzeichnet, dass**
a) die Aerosolvorrichtung (100) eine zusätzliche Aerosoldüse (150) und/oder eine Sprühdüse (152) zum Einsprühen eines Liquids und/oder einen Tropfenerzeuger zum Einleiten von Liquidtropfen umfasst; und/oder
b) die Zuführvorrichtung (148) in einem Aerosolraumboden (124) angeordnet ist, welcher einen der Aerosolführung dienenden Aerosolbereich (122) des Innenraums (106) des Aerosolgehäuses (102) von einem der Liquidaufnahme dienenden Sammelbereich (120) des Innenraums (106) trennt.

6. Aerosolvorrichtung (100) nach einem der Ansprüche 1 bis 4, **dadurch gekennzeichnet, dass** ein Aerosolraumboden (124), welcher einen der Aerosolführung dienenden Aerosolbereich (122) des Innenraums (106) des Aerosolgehäuses (102) nach unten abschließt, eine Kegelmantelform oder Kegelstumpfmantelform aufweist, wobei eine Kegelspitze der Kegelmantelform oder Kegelstumpfmantelform nach unten gerichtet ist.

7. Aerosolvorrichtung (100) nach einem der Ansprüche 1 bis 6, **dadurch gekennzeichnet, dass** mehrere Transportkanalanschlüsse (156) und/oder Transportkanäle (158) voneinander verschiedene Durchmesser aufweisen, so dass insbesondere wahlweise verschiedene Aerosolvarianten mit unterschiedlichen Tröpfchengrößenverteilungen insbesondere möglichst beeinträchtigungsfrei abführbar und/oder transportierbar sind.

8. Aerosolvorrichtung (100) nach einem der Ansprüche 1 bis 7, **dadurch gekennzeichnet, dass** die Aerosolvorrichtung (100) eine Steuervorrichtung (146) umfasst, mittels welcher eine Tröpfchengrößenverteilung und/oder ein Volumenstrom des erzeugten und/oder bereitgestellten Aerosols gezielt einstellbar ist, insbesondere durch:
a) Variation der Volumenströme und/oder der Drücke des Transportgases und/oder des Liquids für die eine oder die mehreren Aerosoldüsen (150); und/oder
b) Variation eines Volumenstroms und/oder eines Drucks eines zusätzlich zu dem Transportgas in den Innenraum (106) eingeleiteten Zusatzgasstroms; und/oder
c) Variation eines Volumenstroms und/oder eines Drucks eines zusätzlich über die Zuführvorrichtung (148) zugeführten Zusatzstoffs, insbesondere des Liquids; und/oder
d) Auswahl einzelner oder mehrere Transportkanalanschlüsse (156) und/oder Transportkanäle (158) zur Abführung des Aerosols.

9. Aerosolvorrichtung (100) nach einem der Ansprüche 1 bis 8, **dadurch gekennzeichnet, dass** ein Entnahmebereich des Aerosolgehäuses (102), an welchen sich ein oder mehrere Transportkanäle (158) anschließen oder welcher einen oder mehrere Transportkanalanschlüsse (156) umfasst oder bildet, eine oder mehrere trichterförmige Auslassöffnungen umfasst.

10. Verfahren zum Bereitstellen eines Aerosols, umfassend:
Erzeugen eines Aerosols aus einem Transportgas und einem Liquid mittels einer oder mehrerer Aerosoldüsen (150),
wobei das Aerosol in einen Innenraum (106) eines Aerosolgehäuses (102) einströmt;
- Abscheiden von Liquidtröpfchen aus dem Aerosol mittels einer in dem Innenraum (106) des Aerosolgehäuses (102) angeordneten Abscheidevorrichtung (160)
- Abführen des Aerosols aus dem Innenraum (106) über einen oder mehrere Transportkanalanschlüsse (156) zum Anschließen eines oder mehrerer Transportkanäle (158),
wobei der Innenraum (106) des Aerosolgehäuses (102) einen Ringstrombereich (110) und einen Zentralbereich (112) umfasst,
wobei der Ringstrombereich (110) und der Zentralbereich (112) mittels einer Trennwandung (114) räumlich voneinander getrennt sind und wobei der Ringstrombereich (110) den Zentralbereich (112) ringförmig umgibt,
wobei die eine oder die mehreren Aerosoldüsen (104) in den Ringstrombereich (110) hineingerichtet sind, wobei der eine oder die mehreren Transportkanalanschlüsse (156) unmittelbar an den Zentralbereich (112) angrenzen,
und wobei das Aerosol in dem Ringstrombereich (110) des Innenraums (106) zunächst zum Abscheiden von Liquidtröpfchen in einem Ringstrom oder Spiralstrom oder Helikalstrom geführt, dann in den innerhalb des Ringstroms oder Spiralstroms oder Helikalstroms angeordneten Zentralbereich (112) des Innenraums (106) umgelenkt und schließlich dem einen oder den mehreren Transportkanalanschlüssen (156) zugeführt wird,
**dadurch gekennzeichnet, dass**
die Aerosolvorrichtung (100) eine Zuführvorrichtung (148) zum Zuführen eines Zusatzstoffes, insbesondere des Liquids, zu dem Innenraum (106) des Aerosolgehäuses (102) umfasst, und dass die Zuführvorrichtung (148) in Schwerkraftrichtung direkt unter dem Zentralbereich (112) des Innenraums (106) des Aerosolgehäuses (102) angeordnet und/oder in den Zentralbereich (112) hineingerichtet ist.

11. Verfahren nach Anspruch 10, **dadurch gekennzeichnet, dass** dem im Innenraum (106) des Aerosolgehäuses (102), insbesondere in dem Zentralbereich (112) des Innenraums (106) des Aerosolgehäuses (102), geführten Aerosol ein Zusatzstoff, insbesondere das Liquid, zugeführt wird.

12. Verfahren nach Anspruch 10 oder 11, **dadurch gekennzeichnet, dass** das aus dem Innenraum (106) des Aerosolgehäuses (102) abgeführte Aerosol einerseits mittels der einen oder der mehreren Aerosoldüsen (104) erzeugte Liquidtröpfchen und andererseits mittels einer Zuführvorrichtung (148) erzeugte Liquidtropfen umfasst, wobei ein mittlerer Durchmesser der Liquidtropfen mindestens ungefähr das 10-Fache, vorzugsweise mindestens ungefähr das 50-Fache, eines mittleren Durchmessers der Liquidtröpfchen beträgt.

13. Verfahren nach einem der Ansprüche 10 bis 12, **dadurch gekennzeichnet, dass** mittels einer Steuervorrichtung (146) wahlweise die Tröpfchengrößenverteilung des Aerosols variiert wird, insbesondere durch
a) Variation der Volumenströme und/oder der Drücke des Transportgases und/oder des Liquids für die eine oder die mehreren Aerosoldüsen (104); und/oder
b) Variation eines Volumenstroms und/oder eines Drucks eines zusätzlich zu dem Transportgas in den Innenraum (106) eingeleiteten Zusatzgasstroms; und/oder
c) Variation eines Volumenstroms und/oder eines Drucks eines zusätzlich über eine Zuführvorrichtung (148) zugeführten Zusatzstoffs, insbesondere Liquids; und/oder
d) Auswahl einzelner oder mehrere Transportkanalanschlüsse (156) und/oder Transportkanäle (158) zur Abführung des Aerosols.

14. Verfahren nach einem der Ansprüche 10 bis 13, **dadurch gekennzeichnet, dass** das Aerosol an einem Bereitstellungsort bereitgestellt wird, welcher an einem gemeinsamen Ende mehrerer Transportkanäle (158) angeordnet ist, wobei abhängig von einem gewünschten Liquidvolumenstrom und/oder Liquidmassenstrom und/oder Aerosolvolumenstrom und/oder Aerosolmassenstrom und/oder abhängig von einer gewünschten Tröpfchengrößenverteilung des Aerosols unterschiedliche Anzahlen von Transportkanälen (158) und/oder unterschiedlich dimensionierte Transportkanäle (158) zur Bereitstellung des Aerosols an dem Bereitstellungsort verwendet werden.

## Claims

1. An aerosol device (100) comprising:
- an aerosol housing (102);
- one or more aerosol nozzles (104) for generating an aerosol flow from a transport gas and a liquid, wherein the one or more aerosol nozzles (104) are directed into an interior space (106) of the aerosol housing (102) and/or are arranged within the aerosol housing (102);
- one or more transport channel connections (156) for connecting one or more transport channels (158), by means of which the aerosol can be discharged from the interior space (106) of the aerosol housing (102),
wherein the aerosol device (100) comprises a separation device (160) for separating liquid droplets from the aerosol, wherein the separation device (160) is arranged with respect to a flow direction of the aerosol between the one or more aerosol nozzles (104) on the one hand and the one or more transport channels (158) on the other hand, wherein the interior space (106) of the aerosol housing (102) comprises an annular flow region (110) and a central region (112),
wherein the annular flow region (110) and the central region (112) are spatially separated from one another by means of a separating wall (114) and wherein the annular flow region (110) annularly surrounds the central region (112),
wherein the one or more aerosol nozzles (104) are directed into the annular flow region (110), and wherein the one or more transport channel connections (156) are immediately adjacent to the central region (112),
**characterized in that**
the aerosol device (100) comprises a supply device (148) for supplying an additive, in particular the liquid, to the interior space (106) of the aerosol housing (102), and **in that** the supply device (148) is arranged in the direction of gravity directly below the central region (112) of the interior space (106) of the aerosol housing (102) and/or is directed into the central region (112).

2. The aerosol device (100) according to claim 1, **characterized in that**
a) the separation device (160) comprises a centrifuge separator (162) and/or a deflector separator (164); and/or
b) the separation device (160) comprises one or more flow-through bodies, in particular a brush separator and/or one or more perforated plate elements.

3. The aerosol device (100) according to claim 1 or 2, **characterized in that** the interior space (106) of the aerosol housing (102) is designed to be at least approximately rotationally symmetrical and/or **in that** the one or more aerosol nozzles (104) are directed at least approximately tangentially into the interior space (106), such that, in particular, an annularly or spirally or helically rotating aerosol gas flow can be generated in the interior space (106) of the aerosol housing (102).

4. The aerosol device (100) according to any one of the claims 1 to 3,
**characterized in that** the separating wall (114) is designed to be hollow-cylindrical.

5. The aerosol device (100) according to any one of the claims 1 to 4,
**characterized in that**
a) the aerosol device (100) comprises an additional aerosol nozzle (150) and/or a spray nozzle (152) for spraying a liquid and/or a drop generator for introducing liquid drops; and/or
b) the supply device (148) is arranged in an aerosol chamber base (124), which separates an aerosol region (122) of the interior space (106) of the aerosol housing (102) serving to guide the aerosol from a collection region (120) of the interior space (106) serving to intake liquid.

6. The aerosol device (100) according to any one of the claims 1 to 4,
**characterized in that** an aerosol chamber base (124), which downwardly closes off an aerosol region (122) of the interior space (106) of the aerosol housing (102) serving to guide the aerosol, has a cone envelope shape or a truncated cone envelope shape, wherein a cone tip of the cone envelope shape or truncated cone envelope shape is directed downwardly.

7. The aerosol device (100) according to any one of the claims 1 to 6,
**characterized in that** multiple transport channel connections (156) and/or transport channels (158) have diameters that differ from one another, such that, in particular, different aerosol variants with different droplet size distributions can be selectively discharged and/or transported, in particular as far as possible without impairment.

8. The aerosol device (100) according to any one of the claims 1 to 7,
**characterized in that** the aerosol device (100) comprises a control device (146) by means of which a droplet size distribution and/or a volume flow of the generated and/or provided aerosol can be selectively adjusted, in particular by:
a) varying the volume flows and/or the pressures of the transport gas and/or the liquid for the one or more aerosol nozzles (150); and/or
b) varying a volume flow and/or a pressure of an auxiliary gas flow introduced into the interior space (106) in addition to the transport gas; and/or
c) varying a volume flow and/or a pressure of an additive, in particular the liquid, additionally supplied via the supply device (148); and/or
d) selecting single or multiple transport channel connections (156) and/or transport channels (158) to discharge the aerosol.

9. The aerosol device (100) of any one of the claims 1 to 8, **characterized in that** an extraction region of the aerosol housing (102), to which one or more transport channels (158) connect or which comprises or forms one or more transport channel connections (156), comprises one or more funnel-shaped outlet openings.

10. A method of providing an aerosol comprising:
- generating an aerosol from a transport gas and a liquid using one or more aerosol nozzles (150), wherein the aerosol flows into an interior space (106) of an aerosol housing (102);
- separating liquid droplets from the aerosol by means of a separation device (160) arranged in the interior space (106) of the aerosol housing (102)
- removing aerosol from the interior space (106) via one or more transport channel connections (156) to connect one or more transport channels (158),
wherein the interior space (106) of the aerosol housing (102) comprises an annular flow region (110) and a central region (112),
wherein the annular flow region (110) and the central region (112) are spatially separated from one another by means of a separating wall (114) and wherein the annular flow region (110) annularly surrounds the central region (112),
wherein the one or more aerosol nozzles (104) are directed into the annular flow region (110), wherein the one or more transport channel connections (156) are immediately adjacent to the central region (112),
and wherein the aerosol in the annular flow region (110) of the interior space (106) is first directed to separate liquid droplets in an annular flow or spiral flow or helical flow, then redirected into the central region (112) of the interior space (106) arranged within the annular flow or spiral flow or helical flow and finally delivered to the one or more transport channel connections (156),
**characterized in that**
the aerosol device (100) comprises a supply device (148) for supplying an additive, in particular the liquid, to the interior space (106) of the aerosol housing (102), and **in that** the supply device (148) is arranged in the direction of gravity directly below the central region (112) of the interior space (106) of the aerosol housing (102) and/or is directed into the central region (112).

11. The method according to claim 10, **characterized in that** an additive, in particular the liquid, is supplied to the aerosol guided in the interior space (106) of the aerosol housing (102), in particular in the central region (112) of the interior space (106) of the aerosol housing (102).

12. The method according to claim 10 or 11, **characterized in that** the aerosol discharged from the interior space (106) of the aerosol housing (102) comprises, on the one hand, liquid droplets generated by means of the one or more aerosol nozzles (104) and, on the other hand, liquid droplets generated by means of a supply device (148), wherein an average diameter of the liquid droplets is at least about 10 times, preferably at least about 50 times, an average diameter of the liquid droplets.

13. The method according to any one of the claims 10 to 12, **characterized in that,** by means of a control device (146), the droplet size distribution of the aerosol is selectively varied, in particular by
a) varying the volume flows and/or pressures of the transport gas and/or fluid for the one or more aerosol nozzles (104); and/or
b) varying a volume flow and/or a pressure of an auxiliary gas flow introduced into the interior space (106) in addition to the transport gas; and/or
c) varying a volume flow and/or a pressure of an additional substance, in particular liquids, supplied via a supply device (148); and/or
d) selecting single or multiple transport channel connections (156) and/or transport channels (158) to discharge the aerosol.

14. The method according to any one of the claims 10 to 13, **characterized in that** the aerosol is provided at a provision location that is arranged at a common end of multiple transport channels (158), wherein different numbers of transport channels (158) and/or differently dimensioned transport channels (158) are used to provide the aerosol at the provision location depending on a desired liquid volume flow and/or liquid mass flow and/or aerosol volume flow and/or aerosol mass flow and/or depending on a desired droplet size distribution of the aerosol.

## Revendications

1. Dispositif aérosol (100) comprenant :
- un boîtier à aérosol (102) ;
- une ou plusieurs buses à aérosol (104) destinées à produire un flux d'aérosol constitué par un gaz de transport et un liquide, l'une ou les plusieurs buses à aérosol (104) étant dirigées vers un espace interne (106) du boîtier à aérosol (102) et/ou agencées dans le boîtier à aérosol (102) ;
- un ou plusieurs raccords de canaux de transport (156) destinés à raccorder un ou plusieurs canaux de transport (158) au moyen desquels l'aérosol peut être évacué à partir de l'espace interne (106) du boîtier à aérosol (102),
le dispositif aérosol (100) comprenant un dispositif de séparation (160) destiné à séparer des gouttelettes de liquide à partir de l'aérosol, le dispositif de séparation (160) étant agencé, par rapport à une direction d'écoulement de l'aérosol, entre l'une ou les plusieurs buses à aérosol (104) d'une part et l'un ou les plusieurs canaux de transport (158) d'autre part, l'espace interne (106) du boîtier à aérosol (102) comprenant une zone d'écoulement annulaire (110) et une zone centrale (112),
la zone d'écoulement annulaire (110) et la zone centrale (112) étant séparées spatialement l'une de l'autre au moyen d'une paroi de séparation (114) et la zone d'écoulement annulaire (110) entourant la zone centrale (112) en forme d'anneau,
l'une ou les plusieurs buses à aérosol (104) étant dirigées vers la zone d'écoulement annulaire (110) et l'un ou les plusieurs raccords de canaux de transport (156) étant directement adjacents à la zone centrale (112),
**caractérisé en ce que**
le dispositif aérosol (100) comprend un dispositif d'alimentation (148) destiné à introduire un additif, en particulier le liquide, dans l'espace interne (106) du boîtier à aérosol (102) et **en ce que** le dispositif d'alimentation (148) est agencé, dans la direction de la gravité, directement sous la zone centrale (112) de l'espace interne (106) du boîtier à aérosol (102) et/ou est dirigé vers la zone centrale (112).

2. Dispositif aérosol (100) selon la revendication 1, **caractérisé en ce que**
a) le dispositif de séparation (160) comprend un séparateur centrifuge (162) et/ou un séparateur déflecteur (164) ; et/ou
b) le dispositif de séparation (160) comprend un ou plusieurs corps d'écoulement, en particulier un séparateur à brosse et/ou un ou plusieurs éléments à plaque perforée.

3. Dispositif aérosol (100) selon la revendication 1 ou 2, **caractérisé en ce que** l'espace interne (106) du boîtier à aérosol (102) est réalisé au moins approximativement avec une symétrie de rotation et/ou **en ce que** l'une ou les plusieurs buses à aérosol (104) sont dirigées au moins approximativement tangentiellement vers l'espace interne (106), de telle sorte qu'en particulier un flux de gaz aérosol rotatif annulaire ou en forme de spirale ou hélicoïdal peut être produit dans l'espace interne (106) du boîtier à aérosol (102).

4. Dispositif aérosol (100) selon l'une des revendications 1 à 3, **caractérisé en ce que** la paroi de séparation (114) est réalisée en forme de cylindre creux.

5. Dispositif aérosol (100) selon l'une des revendications 1 à 4, **caractérisé en ce que**
a) le dispositif aérosol (100) comprend une buse à aérosol supplémentaire (150) et/ou une buse de pulvérisation (152) destinée(s) à injecter un liquide et/ou un générateur de gouttes destiné à introduire des gouttes de liquide ; et/ou
b) le dispositif d'alimentation (148) est agencé dans un fond d'espace à aérosol (124), qui sépare une zone à aérosol (122), servant à guider l'aérosol, de l'espace interne (106) du boîtier à aérosol (102) par rapport à une zone de collecte (120), servant à recevoir le liquide, de l'espace interne (106).

6. Dispositif aérosol (100) selon l'une des revendications 1 à 4,
**caractérisé en ce qu'**un fond d'espace à aérosol (124), qui ferme vers le bas une zone à aérosol (122), servant à guider l'aérosol, de l'espace interne (106) du boîtier à aérosol (102), présente une forme d'enveloppe conique ou une forme d'enveloppe tronconique, une pointe conique de la forme d'enveloppe conique ou de la forme d'enveloppe tronconique étant dirigée vers le bas.

7. Dispositif aérosol (100) selon l'une des revendications 1 à 6,
**caractérisé en ce que** plusieurs raccords de canaux de transport (156) et/ou canaux de transport (158) présentent des diamètres différents les uns des autres, de telle sorte qu'en particulier, au choix, différentes variantes d'aérosol comportant différentes répartitions des grosseurs de gouttelette peuvent être évacuées et/ou transportées, en particulier si possible sans les compromettre.

8. Dispositif aérosol (100) selon l'une des revendications 1 à 7,
**caractérisé en ce que** le dispositif aérosol (100) comprend un dispositif de commande (146) qui permet de régler de manière ciblée une répartition des grosseurs de gouttelette et/ou un flux volumique de l'aérosol produit et/ou préparé, en particulier par :
a) variation des flux volumiques et/ou des pressions du gaz de transport et/ou du liquide pour l'une ou les plusieurs buses à aérosol (150) ; et/ou
b) variation d'un flux volumique et/ou d'une pression d'un flux gazeux supplémentaire guidé dans l'espace interne (106) en plus du gaz de transport ; et/ou
c) variation d'un flux volumique et/ou d'une pression d'un additif, en particulier du liquide, introduit en plus par l'intermédiaire du dispositif d'alimentation (148) ; et/ou
d) sélection de certains ou de plusieurs raccords de canaux de transport (156) et/ou canaux de transport (158) pour évacuer l'aérosol.

9. Dispositif aérosol (100) selon l'une des revendications 1 à 8,
**caractérisé en ce qu'**une zone de prélèvement du boîtier à aérosol (102), à laquelle un ou plusieurs canaux de transport (158) se raccordent ou qui comprend ou forme un ou plusieurs raccords de canaux de transport (156), comprend une ou plusieurs ouvertures de sortie en forme d'entonnoir.

10. Procédé pour la préparation d'un aérosol, comprenant :
- la production d'un aérosol à partir d'un gaz de transport et d'un liquide au moyen d'une ou de plusieurs buses à aérosol (150), l'aérosol s'écoulant dans un espace interne (106) d'un boîtier à aérosol (102) ;
- séparation de gouttelettes de liquide à partir de l'aérosol au moyen d'un dispositif de séparation (160) agencé dans l'espace interne (106) du boîtier à aérosol (102)
- évacuation de l'aérosol hors de l'espace interne (106) par l'intermédiaire d'un ou de plusieurs raccords de canaux de transport (156) destinés à raccorder un ou plusieurs canaux de transport (158),
l'espace interne (106) du boîtier à aérosol (102) comprenant une zone d'écoulement annulaire (110) et une zone centrale (112),
la zone d'écoulement annulaire (110) et la zone centrale (112) étant séparées spatialement l'une de l'autre au moyen d'une paroi de séparation (114) et la zone d'écoulement annulaire (110) entourant la zone centrale (112) en forme d'anneau,
l'une ou les plusieurs buses à aérosol (104) étant dirigées vers la zone d'écoulement annulaire (110), l'un ou les plusieurs raccords de canaux de transport (156) étant directement adjacents à la zone centrale (112),
et l'aérosol étant guidé dans la zone d'écoulement annulaire (110) de l'espace interne (106) d'abord pour séparer des gouttelettes de liquide dans un flux annulaire ou en spirale ou hélicoïdal, puis dévié dans la zone centrale (112) de l'espace interne (106) agencée à l'intérieur du flux annulaire ou en spirale ou hélicoïdal et enfin introduit dans l'un ou les plusieurs raccords de canaux de transport (156),
**caractérisé en ce que**
le dispositif aérosol (100) comprend un dispositif d'alimentation (148) destiné à introduire un additif, en particulier le liquide, dans l'espace interne (106) du boîtier à aérosol (102) et **en ce que** le dispositif d'alimentation (148) est agencé, dans la direction de la gravité, directement sous la zone centrale (112) de l'espace interne (106) du boîtier à aérosol (102) et/ou est dirigé vers la zone centrale (112).

11. Procédé selon la revendication 10, **caractérisé en ce qu'**un additif, en particulier le liquide, est introduit dans l'aérosol guidé dans l'espace interne (106) du boîtier à aérosol (102), en particulier dans la zone centrale (112) de l'espace interne (106) du boîtier à aérosol (102).

12. Procédé selon la revendication 10 ou 11, **caractérisé en ce que** l'aérosol évacué à partir de l'espace interne (106) du boîtier à aérosol (102) comprend d'une part des gouttelettes de liquide produites au moyen de l'une ou des plusieurs buses à aérosol (104) et d'autre part des gouttes de liquide produites au moyen d'un dispositif d'alimentation (148), un diamètre moyen des gouttes de liquide représentant au moins environ 10 fois, de préférence au moins environ 50 fois, un diamètre moyen des gouttelettes de liquide.

13. Procédé selon l'une des revendications 10 à 12, **caractérisé en ce que** la répartition des grosseurs de gouttelette de l'aérosol est variée au choix au moyen d'un dispositif de commande (146), en particulier par
a) variation des flux volumiques et/ou des pressions du gaz de transport et/ou du liquide pour l'une ou les plusieurs buses à aérosol (104) ; et/ou
b) variation d'un flux volumique et/ou d'une pression d'un flux gazeux supplémentaire guidé dans l'espace interne (106) en plus du gaz de transport ; et/ou
c) variation d'un flux volumique et/ou d'une pression d'un additif, en particulier du liquide, introduit en plus par l'intermédiaire d'un dispositif d'alimentation (148) ; et/ou
d) sélection de certains ou de plusieurs raccords de canaux de transport (156) et/ou canaux de transport (158) pour évacuer l'aérosol.

14. Procédé selon l'une des revendications 10 à 13, **caractérisé en ce que** l'aérosol est préparé en un site de préparation qui est agencé en une extrémité commune de plusieurs canaux de transport (158), différents nombres de canaux de transport (158) et/ou des canaux de transport (158) dimensionnés de manière différente étant utilisés en fonction d'un flux volumique liquide souhaité et/ou d'un flux massique liquide souhaité et/ou d'un flux volumique d'aérosol souhaité et/ou d'un flux massique d'aérosol souhaité et/ou en fonction d'une répartition de grosseurs de gouttelette souhaitée de l'aérosol pour préparer l'aérosol au niveau du site de préparation.
